# EUROPÄISCHE PATENTANMELDUNG

(11) **EP 0 839 601 A1**
(43) Veröffentlichungstag der Anmeldung: **06.05.1998**
(21) Anmeldenummer: 97118628.3
(22) Anmeldetag: 27.10.1997
(51) Int. Cl.: B23Q 39/02, B23Q 1/01

(54) **Werkzeugmaschine**

(30) Priorität: 04.11.1996 CH 2715/96
(71) Anmelder: K.R. PFIFFNER AG, 8801 Thalwil (CH)
(72) Erfinder: Schweizer, Hanspeter, 8646 Wagen (CH)
(74) Vertreter: EGLI-EUROPEAN PATENT ATTORNEYS

(57) **Zusammenfassung**

Um eine Werkzeugmaschine, insbesondere für die Drehbearbeitung von Werkstücken, die ein Gestell, in das während der Bearbeitung auftretende Belastungen ableitbar sind, eine Trageinrichtung, die Bestandteil des Gestells ist und an welcher mindestens eine Werkzeughalteeinrichtung anbringbar ist, wobei an jeder Werkzeughalteeinrichtung eine Werkzeughalterung zur Aufnahme eines Werkzeuges anordenbar ist, mindestens eine Spindel, durch die eine an der Spindel anbringbare Werkstückhalteeinrichtung in eine Rotationsbewegung versetzbar ist, zumindest eine Verfahreinrichtung zur Ausführung einer eine translatorische Komponente aufweisenden Relativbewegung zwischen der Werkzeughalterung und der Werkstückhalteeinrichtung, umfasst, mit guten Steifigkeitseigenschaften auszustatten und mit ihr kurze Bearbeitungszyklen trotz des Einsatzes mehrerer Werkzeuge zu ermöglichen, schlägt die Erfindung vor, bei einer solchen Werkzeugmaschine, die Trageinrichtung als eine Tragwand auszubilden, welche die Spindel umgibt, und die Spindel mit ihrer Drehachse im wesentlichen vertikal auszurichten.

## Beschreibung

Die Erfindung betrifft eine Werkzeugmaschine, insbesondere für die Drehbearbeitung von Werkstücken, gemäss dem Oberbegriff von Anspruch 1.

In der industriellen Produktion werden zur abtragenden Bearbeitung von Werkstücken Werkzeugmaschinen eingesetzt. Bekanntlich werden an diese Werkzeugmaschinen, wie beispielsweise Drehmaschinen oder auch Fräsmaschinen, unterschiedliche Anforderungen gestellt. So sollen diese Fertigungsmittel zum einen möglichst geringe Fertigungstoleranzen erzielen. Zum anderen soll mit derartigen Maschinen eine rationelle Fertigung möglich sein, was üblicherweise hohe Zerspanungsleistungen erfordert. Dies ist jedoch in der Regel nur mit hohen Drehzahlen und somit mit grossen Zerspankräften erreichbar, die wiederum eine hohe Eigensteifigkeit der Maschine erforderlich machen, damit die geringen Fertigungstoleranzen auch eingehalten werden können. Ausserdem sollen die Maschinen zur Erzielung einer wirtschaftlichen Produktion möglichst günstig sein, was in der Regel nur durch einen einfachen Aufbau erreicht werden kann, durch den in der Regel aber keine hohe Eigensteifigkeit der Maschine erzielbar ist. Wie unschwer zu erkennen ist, werden somit an Werkzeugmaschinen sich grundsätzlich widersprechende Anforderungen gestellt.

Um die Produktivität einer Drehmaschine zu steigern, sind deshalb bereits einige prinzipielle Maschinenkonzepte vorbekannt. So werden beispielsweise Mehrspindel-Drehmaschinen eingesetzt, durch die gleichzeitig mehrere Werkstücke bearbeitet werden können. Ebenso sind Mehrschnitt-Drehmaschinen bekannt, bei denen ein Werkstück gleichzeitig mit mehreren Werkzeugen bearbeitet wird.

Des weiteren ist es vorbekannt, die für einen Bearbeitungszyklus erforderlichen Werkzeuge in einem Werkzeugmagazin der Drehmaschine zu lagern. Im Bedarfsfall werden die Werkzeuge durch ein Werkzeugwechselsystem aus dem Werkzeugmagazin in eine Arbeitsstation überführt, in der jeweils die Drehbearbeitungen durchgeführt werden. In anderen vorbekannten Maschinen verbleibt das Werkzeug im Werkzeugmagazin, wobei letztgenanntes verschwenkt oder verfahren wird, um das entsprechende Werkzeug in eine Arbeitsposition zu bringen, wie dies beispielsweise bei einem Revolvermagazin der Fall ist.

Bei diesen vorbekannten Maschinenkonzepten kann, gleich welches der Konzepte verwendet wird, nicht zufriedenstellen, dass der Wechsel von einem ersten zu einem zweiten Werkzeug eines Werkzeugmagazins relativ viel Zeit in Anspruch nimmt, währenddem die Maschine unproduktiv ist. Auch der Einsatz von mehreren Werkzeugmagazinen und Werkzeugwechselsystemen kann keine entscheidende Verbesserung bringen, da in bezug auf ein bestimmtes Werkzeugmagazin immer noch Werkzeugwechselzeiten entstehen.

Ebenso sind für die Erzielung ausreichender Steifigkeitseigenschaften von Drehmaschinen bereits einige grundsätzliche Gestellbauweisen bekannt geworden, wie beispielsweise Ständer-, Portal- oder auch Bettgestelle. Diesen Gestelltypen ist eine Konstruktion gemeinsam, durch welche die bei einer Drehbearbeitung am Werkstück entstehenden Belastungen über die Werkstückspanneinrichtung und die Spindel in einen ersten Teil des Gestells geleitet werden. Die am Werkzeug auftretenden Belastungen werden über die Werkzeughalterung in einen anderen Teil des Gestells geleitet. Die beiden Gestellteile können, müssen jedoch nicht miteinander verbunden sein. Damit translatorische Relativbewegungen zwischen dem Werkstück und dem Werkzeug ausführbar sind, ist üblicherweise die Werkzeughalterung gegenüber der Werkstückspannvorrichtung entlang mehrerer Achsen verfahrbar ausgebildet.

Dieser prinzipielle Aufbau hat mehrere Nachteile. Ein wesentlicher Nachteil besteht darin, dass solche vorbekannten Maschinen in der Regel relativ gross bauen. Dies ist unter anderem darauf zurückzuführen, dass bei einem Werkzeugwechsel die Werkzeughalterung und das Werkzeugwechselsystem in eine "neutrale Position" verfahren werden müssen, um eine Kollision mit dem Werkstück zu vermeiden. Dadurch werden, insbesondere bei kleinen Drehteilen, im Vergleich zu den eigentlichen Vorschubbewegungen der Werkzeuge während der Bearbeitung, lange Linearführungen benötigt. Je grösser eine Maschine baut, umso aufwendiger ist es jedoch die Maschine ausreichend steif auszubilden.

Die Aufgabe der vorliegenden Erfindung besteht deshalb darin, eine Werkzeugmaschine mit guten Steifigkeitseigenschaften zu schaffen, mit der kurze Bearbeitungszyklen trotz des Einsatzes mehrerer Werkzeuge möglich sind.

Die Aufgabe wird bei einer eingangs erwähnten Werkzeugmaschine erfindungsgemäss gelöst, in dem die Tragwand zumindest abschnittsweise in sich geschlossen ausgebildet ist, in bezug auf Bewegungsachsen die mindestens eine Spindel lediglich eine Drehachse aufweist, die mit der Längsachse der Spindel übereinstimmt, und die Werkstückhalteeinrichtung im Bereich des oberen Endes der Spindel - vorzugsweise an einer oberen Stirnfläche der Spindel - anordenbar ist.

In einer vorteilhaften erfindungsgemässen Weiterbildung ist die Tragwand gekrümmt ausgebildet. In Verbindung mit der vorliegenden Erfindung ist unter einer "Krümmung" zum einen eine gebogene stetige geometrische Form zu verstehen. Zum anderen kann eine Krümmung aber auch durch eine polygonartige Anordnung von mehreren an sich ebenen Wandabschnitten erreicht werden, wie dies beispielsweise bei einer wabenförmigen Anordnung von ebenen Wandabschnitten der Fall ist. Des weiteren sind durch den Begriff "Tragwand" ausser tatsächlichen Wänden mit im wesentlichen geschlossenen Wandflächen auch solche Gebilde zu verstehen, bei denen lediglich eine äussere Kontur eine wandförmige Gestalt aufweist, ohne dass eine Wandfläche vorhanden ist. Somit ist auch eine aus Streben aufgebautes Fachwerk als Tragwand im Sinne der Erfindung zu verstehen.

Der erfindungsgemässe Aufbau hat den Vorteil, dass mit geringem konstruktiven Aufwand mehrere Werkzeuge eingesetzt werden können und trotzdem eine kontinuierliche und unterbruchsfreie Bearbeitung von Werkstücken möglich ist. Die Tragwand sollte in sich geschlossen, insbesondere ringförmig geschlossen, ausgebildet, wodurch sich besonders gute Steifigkeitseigenschaften erzielen lassen. Hierbei kann die Tragwand nahezu jede in sich geschlossene geometrische Form aufweisen, wie beispielsweise quader-, kegelstumpf- oder zylinderförmig. Mit einem ringförmig geschlossenen, insbesondere mit einem kreisringförmigen, Querschnitt lassen sich Biege- und Torsionbelastungen mit möglichst geringen Verformungen der Tragwand aufnehmen. Ausserdem entstehen bei einer solchen Tragwand bei schwankenden Temperaturen auch nur geringe Wärmeausdehnungen. Da die Werkzeuge, bzw. die Werkzeughalteeinrichtungen, in oder an der Tragwand gelagert sind, haben diese Vorteile eine unmittelbare Auswirkung auf die Fertigungsgenauigkeit, die mit erfindungsgemässen Werkzeugmaschinen erzielbar sind. Aber bereits gekrümmte, jedoch nicht vollständig in sich geschlossene Tragwände zeigen bessere Steifigkeitseigenschaften, als die bisher üblichen, im wesentlichen zweidimensionalen Trageinrichtungen der Gestellwände an denen Werkzeuge angeordnet sind.

Ebenso kann vorgesehen sein, dass die ortsfeste und im wesentlichen vertikal ausgerichtete Tragwand nur hinsichtlich einen Abschnitt ihrer Höhe in sich geschlossen ist. Es ist dabei bevorzugt, wenn insbesondere der Teil der Tragwand in sich geschlossen ausgebildet ist, welcher der Werkstückaufnahme gegenüberliegt und der somit zur Werkstückaufnahme den geringsten Abstand aufweist. Es hat sich als zweckmässig erwiesen, wenn - in bezug auf die Wandhöhe - zumindest die obere Hälfte der Tragwand in sich geschlossen ist. Desweiteren sollten Werkzeugaufnahmen - vorzugsweise sämtliche Werkzeugaufnahmen - an dem Bereich der Tragwand befestigt sein, der in sich geschlossen gestaltet ist, da hierdurch die während einer Werkstückbearbeitung auftretenden Belastungen besonders geringe Verformungen des Gestells hervorrufen.

Ein weiterer Vorteil ergibt sich aus der im wesentlichen senkrechten Anordnung der Werkstückspindel, durch welche einerseits die Bearbeitung der Werkstücke besonders gut beobachtet und visuell kontrolliert werden kann. Andererseits kann mit dieser Anordnung eine Biegung der Spindel aufgrund ihres Eigengewichtes vermieden werden. Des weiteren ergeben sich auch Vorteile beim Einrichten der Maschine. Der Bearbeitungsraum der Maschine, welcher durch die die Spindel umgebende und im wesentlichen senkrecht stehende Tragwand begrenzt wird, ist bei dem erfindungsgemässen Maschinenkonzept für Einrichtungsarbeiten besonders gut zugänglich. Um die Zugänglichkeit nochmals zu verbessern, kann auch zusätzlich vorgesehen sein, dass für das Bedienungspersonal eine um die Tragwand herum angeordnete begehbare Plattform vorgesehen ist.

In einer weiteren zweckmässigen Ausgestaltung weist die Werkzeugmaschine eine Kapselung auf, mit welcher der Austritt von Spänen und Kühlflüssigkeit aus dem Bearbeitungsraum verhindert und Bedienpersonen vor gebrochenen Werkzeugen oder Werkstücken geschützt wird. Eine solche Kapselung lässt sich besonders einfach ausbilden, indem die Tragwand als Zylinder gestaltet ist, dessen Mantelfläche geschlossen ist und eine obere Stirnseite der Tragwand durch eine durchsichtige Abdeckung vollständig abdeckbar ist.

Weitere bevorzugte Ausgestaltungen der Erfindung ergeben sich aus den abhängigen Ansprüchen.

Die Erfindung wird anhand den in den Figuren schematisch dargestellten Ausführungsbeispielen näher erläutert; es zeigen:
- Fig. 1: eine Vorderansicht einer erfindungsgemässen Werkzeugmaschine;
- Fig. 2: eine Schnittdarstellung entlang der Linie II - II aus Fig. 1;
- Fig. 3: eine zweite erfindungsgemässe Werkzeugmaschine in einer Draufsicht;
- Fig. 4: eine weitere Ausführungsform einer erfindungsgemässen Werkzeugmaschine in einer Draufsicht;
- Fig. 5: eine perspektivische Darstellung eines Teils einer weiteren erfindungsgemässen Werkzeugmaschine.

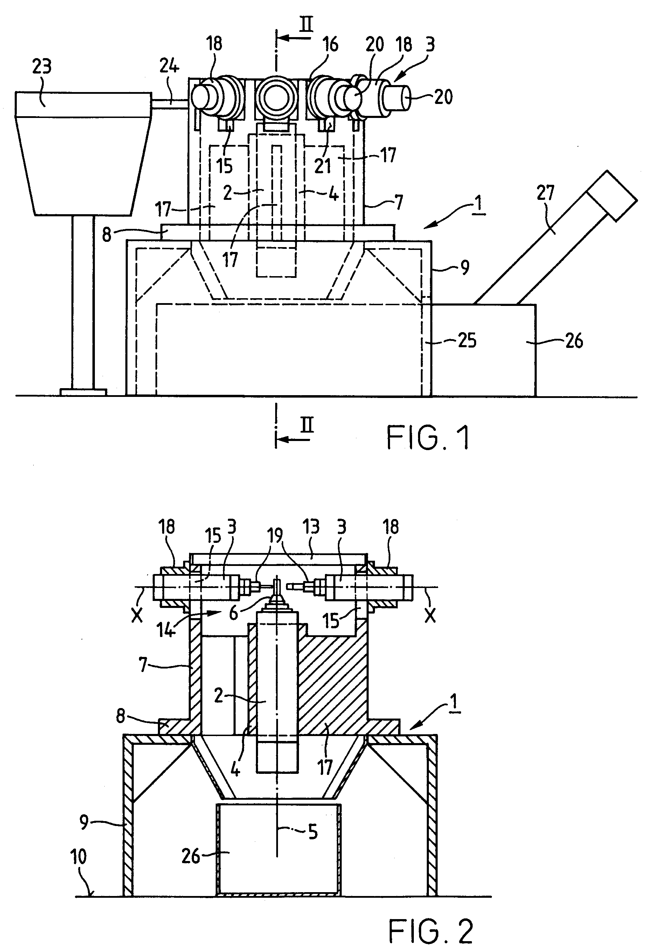

Fig. 1 und Fig. 2 zeigen eine erfindungsgemässe Drehmaschine, die ein Gestell 1, eine Spindel 2 sowie mehrere Werkzeughalteeinrichtungen 3 aufweist.

Wie in dieser Darstellung zu erkennen ist, ist die Spindel 2 in einer zylindrischen Ausnehmung einer Spindelaufnahme 4 angeordnet und mit nicht näher dargestellten Wälzlagern gelagert. Des weiteren ist zu erkennen, dass die Spindel 2 mit ihrer Drehachse 5 vertikal ausgerichtet ist. Grundsätzlich könnte jedoch auch vorgesehen sein, dass die Spindel nur im wesentlichen vertikal ausgerichtet ist. Im Sinne der vorliegenden Erfindung sind "im wesentlichen vertikale" Ausrichtungen solche Ausrichtungen, bei denen die Spindelachse mit einer Bodenfläche einen Winkel von 45° bis 90°, bevorzugterweise von 70° bis 90°, einschliesst.

Im Bereich ihres oberen Endes ist an der Spindel eine Werkstückspanneinrichtung 6 befestigt, in die ein Werkstück einspannbar ist. Eine solche Werkstückspanneinrichtung 6 kann beispielsweise ein pneumatisch betätigtes Dreibackenfutter sein. Durch die Werkstückspanneinrichtung 6 kann ein Werkstück so eingespannt werden, dass dessen Längs- bzw. Rotationsachse mit der Drehachse 5 der Spindel 2 fluchtet.

Die Spindel 2 ist von einer kreisringförmig ausgebildeten und in sich geschlossenen Tragwand 7 des Gestells 1 koaxial umgeben, die mit einem an deren unteren Ende angeordneten Flansch 8 auf einem ebenfalls ringförmigen Ständer 9 der Maschine befestigt ist. Der Ständer 9 des Gestells 1 steht mit einer Standfläche auf einer Bodenfläche 10 auf und ist ebenfall koaxial zur Spindel 2 angeordnet. Somit sind ausser der Drehachse 5 auch Wandflächen des Ständers 9 und der Tragwand 7 senkrecht zur Bodenfläche 10 ausgerichtet. In anderen Ausführungsformen können die Tragwand 7 und der Ständer 9, anstelle des in den Figuren gezeigten mehrteiligen Aufbaus, auch einstückig ausgebildet sein.

Zusammen mit einer auf einer oberen Stirnfläche angeordneten kreisrunden Plexiglasscheibe 13 bildet die Tragwand 7 einen gekapselten Bearbeitungsraum 14 aus. Das Gestell dieser Werkzeugmaschine besteht somit ausschliesslich aus dem Ständer 9, der Tragwand 7, den drei Versteifungsplatten 17, sowie der Spindelaufnahme 4.

Wie den Fig. 1 und 2 entnommen werden kann, weist die Tragwand 7 im Bereich einer oberen Stirnfläche mehrere Ausnehmungen 15 auf. Die Ausnehmungen 15 sind an einer horizontal verlaufenden (imaginären) Umfangslinie der Tragwand 7 gleichmässig verteilt. Um die Ausnehmungen 15 herum ist die Aussenfläche der Wand 7 jeweils als ebene Flanschfläche 16 ausgebildet. Dies wurde durch entsprechende Fräsbearbeitungen der als Gussteil ausgebildeten Tragwand 7 erreicht.

Des weiteren zeigt Fig. 1 in Verbindung mit Fig. 2, dass an der Innenfläche der Tragwand 7 als Versteifungsrippen drei oder mehr vertikal ausgerichtete Versteifungsplatten 17 angeordnet sind. Die jeweils mit der Tragwand 7 als auch mit der Spindelaufnahme 4 einstückig verbundenen Versteifungsplatten 17 sind gleichmässig am Umfang der Spindelaufnahme 4 verteilt. In bezug auf die Spindel 2 bzw. die Spindelaufnahme 4 sind die Versteifungsplatten 17 radial zu diesen, d.h. entlang von Durchmesserslinien angeordnet.

Auf der Flanschfläche 7 befinden sich jeweils als zylindrische Flansche 18 ausgebildete Aufnahmen. In den Flanschen 18 wiederum sind die Werkzeughalteeinrichtungen 3 angeordnet, an denen jeweils eine zur Aufnahme von Drehwerkzeugen vorgesehene Werkzeughalterung 19 befestigt ist. Die Werkzeughalterungen 19 sind zusammen mit der jeweiligen Werkzeughalteeinrichtung 3 und dem entsprechenden Flansch 18 entlang zweier orthogonal zueiander ausgerichteten Achsen (X- und Y-Achse) relativ zur Tragwand 7 translatorisch verfahrbar. Sämtliche Werkzeuge können durch ihre Werkzeughalteeinrichtung 3 in einer Position angeordnet werden, in welcher jeweils ihre X-Achsen radial und orthogonal zur vertikal ausgerichteten Spindel 2 bzw. Drehachse 5 verläuft, während die jeweilige Y-Achse parallel zur Drehachse 5 ausgerichtet ist. Damit die Werkzeughalteeinrichtungen 3 jeweils in Y-Richtung verfahrbar sind, Ist deshalb jede Werkzeughalteeinrichtung 3 mit einem nicht dargestellten geradlinig verfahrbaren Schlitten einer Verstell- bzw. Verfahreinrichtung ausgestattet, dessen Führungen auf Begrenzungsflächen 21 der Ausnehmung 15 oder auf der Flanschfläche der Tragwand 7 befestigt sind. Des weiteren ist zur Erzeugung der Verfahrbewegungen jede Werkzeughalteeinrichtung 3 mit einer Antriebseinrichtung 20 versehen. Sowohl die Antriebseinrichtungen 20 der Werkzeughalteeinrichtungen 3 als auch der Antrieb der Spindel kann über eine nicht näher dargestellte Steuerung gesteuert werden.

Desweiteren ist die erfindungsgemässe Werkzeugmaschine mit einem Werkstückmagazin 23 ausgestattet, in dem sich Werkstückrohlinge befinden. Die Rohlinge können mit einer durch die Tragwand 7 hindurchgehende Rutsche 24 der Werkstückspannvorrichtung 6 automatisch zugeführt werden. In einer rechteckigen Öffnung 25 des Ständers 9 ist ausserdem ein Auffangbecken 26 für Späne und Kühlmittel eines Späneförderers 27 angeordnet.

Für die Bearbeitung eines Werkstückes wird das in der Werkstückspanneinrichtung 6 eingespannte Werkstück durch die Spindel 2 in Rotation versetzt. Die spanende Bearbeitung erfolgt anschliessend durch die Zustellung der Drehwerkzeuge und durch Vorschubbewegungen in X- und Y-Richtung. Dabei ist es grundsätzlich möglich die Werkzeuge nacheinander als auch gleichzeitig einzusetzen. Insbesondere wenn mit mehreren Werkzeugen gleichzeitig verschiedene Bearbeitungen durchgeführt werden, können die Produktionszeiten erheblich verkürzt werden. Aber auch beim aufeinanderfolgenden Einsatz von Werkzeugen können dadurch, dass sich das jeweils nächstfolgende Werkzeuge schon unmittelbar vor seiner Arbeitsposition befindet, wenn das zuvor eingesetzte Werkzeug zurückgezogen wird, unproduktive Werkzeugwechselzeiten nahezu vermieden werden.

Mit einer solchen erfindungsgemässen Werkzeugmaschine können aber ausser Drehbearbeitungen auch andere Fertigungsverfahren durchgeführt werden. So ist es beispielsweise möglich, die Werkzeughalteeinrichtungen jeweils mit einem Rotationsantrieb zu versehen, wodurch auch Bohr- oder Fräsbearbeitungen ausführbar sind.

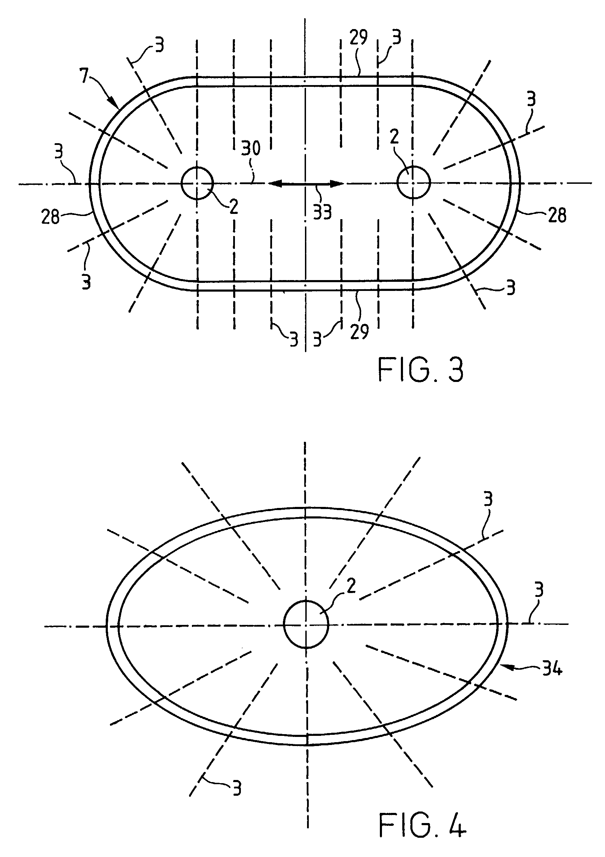

Selbstverständlich kann das erfindungsgemässe Maschinenkonzept auch für zwei oder mehrspindelige Werkzeugmaschinen eingesetzt werden. So ist in Fig. 3 beispielhaft und stark schematisiert eine zweispindelige erfindungsgemässe Werkzeugmaschine dargestellt. Zur Vermeidung von Wiederholungen werden lediglich die prinzipiellen Unteschiede zum Ausführungsbeispiel gemäss Fig. 1 erläutert. Auch hier sind die beiden Spindeln 2 von einer ringförmig geschlossenen einstückigen Tragwand 7 umgeben, die zwei Hälften 28 eines Hohlzylinders mit kreisförmigen Querschnitt, sowie zwei zwischen den beiden Zylinderhälften angeordnete plattenförmige Abschnitte 29 aufweist. Die beiden Spindeln 2 sind dabei jeweils so angeordnet, dass deren Drehachsen einerseits mit den Längsachsen der Hohlzylinderhälften fluchten und andererseits sich auf einer Symmetrielinie 30 der Tragwand 7 befinden.

Auch hier sind die lediglich mit Strichlinien angedeuteten Werkzeughalteeinrichtungen 3 gleichmässig am Umfang der Zylinderhälften verteilt. Zusätzlich befinden sich aber auch an den plattenförmigen Abschnitten 29 der Tragwand 7 Werkzeuge in Werkzeughalteeinrichtungen 3. Eine Bewegungsachse dieser Werkzeughalteeinrichtungen, nämlich die entlang den entsprechenden Strichlinien 3 verlaufende X-Achse, ist jeweils senkrecht zum entsprechenden plattenförmigen Abschnitt 29 ausgerichtet. Um die Werkstücke in eine vorbestimmte Arbeitsposition vor den Werkzeugen der plattenförmigen Abschnitte 29 zu positionieren, können die Spindeln gemäss dem Doppelpfeil 33 entlang der Symmetrielinie 30 der Tragwand verfahrbar sein. In den Arbeitspositionen sind die Spindeln gegen translatorische Bewegungen arretierbar, wodurch die Werkstücke gleichzeitig jeweils durch Werkzeuge von sich gegenüberliegenden Werkzeughalteeinrichtungen 3 bearbeitbar sind.

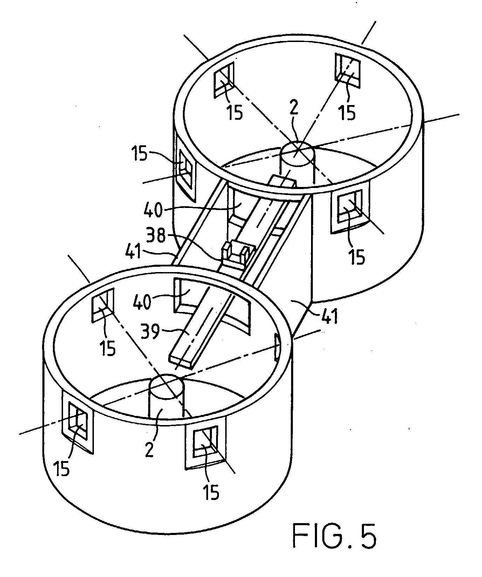

Anstelle eine Spindel verfahrbar auszugestalten, kann beispielsweise auch ein auf einer Schiene 39 verfahrbar angeordneter Handhabungsautomat 38 vorgesehen sein, wie dies im stark schematisiert dargestellten Ausführungsbeispiel von Fig. 5 der Fall ist. Auch mit einer solchen Übergabeeinrichtung kann ein Werkstück vor weiteren Werkzeughalteeinrichtungen positioniert werden, mit denen in der ursprünglichen Position der Spindel keine Bearbeitungen am Werkstück ausführbar waren.

Wie Fig. 5 zu entnehmen ist, verkettet in diesem Ausführungsbeispiel der Handhabungsautomat zwei Werkstückhalteeinrichtungen von zwei Spindeln bzw. von zwei erfindungsgemässen Werkzeugmaschinen miteinander, indem er Werkstücke von einer Werkstückhalteeinrichtung entnehmen und in die Werkstückhalteeinrichtung der anderen Spindel einsetzen kann. Die zwei erfindungsgemässen Werkzeugmaschinen entsprechen im wesentlichen der in Fig. 1 gezeigten Werkstückmaschine. Im Unterschied zu dieser weisen die beiden Werkzeugmaschinen jedoch jeweils einen Durchbruch 40 in ihrer zylindrischen Tragwand auf, durch die der zwischen zwei Verbindungswänden 41 angeordnete Handhabungsautomat in die Bearbeitungsräume der beiden Werkzeugmaschinen hineinfahren kann.

Bei einem weiteren erfindungsgemässen Ausführungsbeispiel weist die Tragwand in der Darstellung von Fig. 4 die Form eines elliptischen Hohlzylinders 34 auf. Die Ausrichtung der Werkzeughalteeinrichtungen 3 ist dabei so vorgenommen, dass sich deren X-Achse jeweils mit der Spindelachse schneiden.

## Patentansprüche

1. Werkzeugmaschine, insbesondere für die Drehbearbeitung von Werkstücken, umfassend
ein Gestell, in das während der Bearbeitung auftretende Belastungen ableitbar sind,
eine Trageinrichtung, welche eine Tragwand aufweist, die Bestandteil des Gestells ist und an welcher mindestens eine Werkzeughalteeinrichtung anbringbar ist, wobei an jeder Werkzeughalteeinrichtung eine Werkzeughalterung zur Aufnahme eines Werkzeuges anordenbar ist,
mindestens eine im wesentlichen vertikal ausgerichtete Spindel, durch die eine an der Spindel anbringbare Werkstückhalteeinrichtung in eine Rotationsbewegung versetzbar ist, wobei die Tragwand die Spindel zumindest mit einem Abschnitt umgibt,
an jeder Werkzeughalteeinrichtung zumindest eine Verfahreinrichtung zur Ausführung einer eine translatorische Komponente aufweisenden Relativbewegung zwischen der Werkzeughalterung und der Werkstückhalteeinrichtung,
**dadurch gekennzeichnet, dass**
die Tragwand (7) zumindest abschnittsweise in sich geschlossen ausgebildet ist, dass die mindestens eine Spindel (2) in bezug auf Bewegungsachsen lediglich eine Drehachse (5) aufweist, die mit der Längsachse der Spindel (2) übereinstimmt, und dass die Werkstückhalteeinrichtung im Bereich des oberen Endes der Spindel (2) anordenbar ist.

2. Werkzeugmaschine nach Anspruch 1, dadurch gekennzeichnet, dass sich zumindest eine der Werkzeughalteeinrichtungen (3) in dein Bereich der Tragwand (7) befindet, in dem die Tragwand in sich geschlossen ist.

3. Werkzeugmaschine nach Anspruch 2, dadurch gekennzeichnet, dass sich sämtliche Werkzeughalteeinrichtungen (3) in dem Bereich der Tragwand (7) befinden, in dem die Tragwand in sich geschlossen ist.

4. Werkzeugmaschine nach einem oder mehreren der vorhergehenden Ansprüche, dadurch gekennnzeichnet, dass die Drehachse (5) der Spindel (2) einer Symmetrieachse von zumindest einem Abschnitt der Tragwand (7) entspricht oder dass die Drehachse in einer Symmetrieebene von zumindest einem Abschnitt der Tragwand liegt.

5. Werkzeugmaschine nach einem oder mehreren der vorhergehenden Ansprüche, dadurch gekennzeichnet, dass die Tragwand (7) gekrümmt ist.

6. Werkzeugmaschine nach einem oder mehreren der vorhergehenden Ansprüche, dadurch gekennzeichnet, dass in bezug auf ihre Wandhöhe die Tragwand (7) vollständig, zumindest jedoch überwiegend, in sich geschlossen ausgebildet ist.

7. Werkzeugmaschine nach Anspruch 5, dadurch gekennzeichnet, dass die Tragwand (7) ringförmig ausgebildet ist.

8. Werkzeugmaschine nach einem oder mehreren der vorhergehenden Ansprüche, dadurch gekennzeichnet, dass die Tragwand (7) mit einer zylindrischen Form versehen ist.

9. Werkzeugmaschine nach den Ansprüchen 4 und 8, dadurch gekennzeichnet, dass die Tragwand (7) im wesentlichen als Hohlzylinder ausgebildet ist, und dass die Spindel (2) so anordenbar ist, dass die Drehachse (5) der Spindel (2) im wesentlichen einer Längsachse des Hohlzylinders entspricht.

10. Werkzeugmaschine nach einem oder mehreren der vorhergehenden Ansprüche, dadurch gekennzeichnet, dass entlang einer Umfangslinie der Tragwand (7) Aufnahmen gleichmässig verteilt sind, an denen die Werkzeughalteeinrichtungen (3) anbringbar sind.

11. Werkzeugmaschine nach einem oder mehreren der vorhergehenden Ansprüche, dadurch gekennzeichnet, dass, die Tragwand (7) einen Bearbeitungsraum (14) ausbildet, der durch die Tragwand (7) und eine auf einer oberen Stirnseite der Tragwand (7) anordenbaren Abdeckung gegen einen Austritt von Spänen abschliessbar ist.

12. Werkzeugmaschine nach einem oder mehreren der vorhergehenden Ansprüche, dadurch gekennzeichnet, dass die Tragwand (7) als Gussteil oder als Schweisskonstruktion ausgebildet ist.

13. Werkzeugmaschine nach einem oder mehreren der vorhergehenden Ansprüche, dadurch gekennzeichnet, dass eine Spindelaufnahme (4) an der Tragwand (7) oder einem Ständer (9), auf dem die Tragwand (7) angeordnet ist, befestigt ist.

14. Werkzeugmaschine nach Anspruch 13, gekennzeichnet durch Versteifungsrippen, die zwischen der Tragwand (7) und der Spindelaufnahme (4) angeordnet und mit diesen verbunden sind.
